**Europäisches Patentamt**

**European Patent Office**

**Office européen des brevets**

(19)

(11) Veröffentlichungsnummer: **0 116 336**
**A2**

(12) ## EUROPÄISCHE PATENTANMELDUNG

(21) Anmeldenummer: 84100960.8

(22) Anmeldetag: 31.01.84

(51) Int. Cl.³: **B 23 D 33/02**
**B 65 H 17/42, B 21 C 49/00**

(30) Priorität: 10.02.83 CH 764/83

(43) Veröffentlichungstag der Anmeldung:
22.08.84 Patentblatt 84/34

(84) Benannte Vertragsstaaten:
BE DE FR GB

(71) Anmelder: Ulrich Steinemann AG Maschinenfabrik
Schoretshubstr. 25
CH-9015 St. Gallen(CH)

(72) Erfinder: Angehrn, Anton
Gehrenacker 19
Ch-9030 Abtwil(CH)

(72) Erfinder: Schnetzer, Max
Witenwisstrasse 8
CH-9202 Gossau(CH)

(74) Vertreter: Meyer, Reinhard, Dipl.-Ing.
c/o Dr. A. R. Egli & Co. Patentanwälte Horneggstrasse 4
CH-8008 Zürich(CH)

(54) **Vorrichtung zur Aufnahme und Steuerung einer Ausgleichsschlaufe in einem kontinuierlich herangeführten und schrittweise weiterbewegten Metallband.**

(57) Die Vorrichtung weist einen Schlaufentisch (11) auf. Dieser ist unter dem die Bandrolle (1) ragenden Rollenhaspel (2) angeordnet, vorzugsweise in einer geneigten Lage. Er dient dazu, den ablaufseitigen Abschnitt (63) einer Ausgleichsschlaufe (6), des Bandes (4) aufzunehmen. Auf diese Weise liegt die Schlaufe (6) unter ihrem eigenen Gewicht auf dem Schlaufentisch (11) auf. Dadurch werden Schwingungen in der Schlaufe und damit Bandbeschädigungen vermieden, wie sie bei den bisher bekannten freihängenden Schlaufen üblich waren.

FIG. 2

**EP 0 116 336 A2**

Vorrichtung zur Aufnahme und Steuerung einer Ausgleichsschlaufe in einem kontinuierlich herangeführten und
schrittweise weiterbewegten Metallband

---

Die Erfindung betrifft eine Vorrichtung zur Aufnahme und
Steuerung einer Ausgleichsschlaufe in einem kontinuierlich
von einer Bandrolle herangeführten und schrittweise zu
einer Bandabtrenneinrichtung weiterbewegten Metallband,
wobei die Bandrolle auf einem Rollenhaspel aufgewickelt
ist und die Ausgleichsschlaufe den Uebergang vom kontinuierlich zum schrittweise bewegten Teil des Bandes
bildet.

Zur Herstellung von einzelnen Zuschnitten aus einem
Metallband, wie diese z.B. für Transformatoren-Kernbleche
verwendet werden, wird das Metallband von einer Bandrolle abgezogen. Hierbei ist es wegen des Abtrennvorgangs,
des sogenannten Ablängens, unumgänglich, dass das Band
im Takt vorgeschoben wird. Ein solcher Takt besteht aus
zwei Schritten, nämlich aus einem Bandvorschub und aus
dem Ablängen des Bandes. Es können bis zu dreihundert
Takte pro Minute gefahren werden, wobei auch Takte auftreten, in denen das Band nicht vorgeschoben, sondern
zurückgezogen wird. Damit die grosse Masse der Bandrolle,
deren Gewicht bis zu fünftausend Kilo beträgt, nicht
bei jedem Takt beschleunigt und wieder abgebremst werden muss, wird eine Vorrats- und Ausgleichsschlaufe vorgesehen. Durch den Vorschub wird der jeweils benötigte Bandabschnitt schrittweise von der Ausgleichsschlaufe abgezogen, während gleichzeitig mit einer kontinuierlichen
Geschwindigkeit das Band von der Bandrolle her in die
Ausgleichsschlaufe nachgeführt wird. Diese befindet sich
also im Uebergang vom kontinuierlich bewegten Teil des
Bandes zum schrittweise bewegten.

Die bisher verwendeten Vorrichtungen arbeiten mit einer
Schlaufe, deren eines Ende von der Bandrolle, das andere,
ablaufseitige, von einem der Bandabtrenneinrichtung vorgeschalteten Umklenksegment herunterhängt. Damit für die
Bandabtrenneinrichtung jederzeit genügend Vorrat vorhanden ist, muss die Schlaufe möglichst gross gemacht werden.
Da jedoch die Bandabtrenneinrichtung nicht beliebig hoch
über dem Boden angeordnet werden kann, muss in demselben
eine tiefe Grube vorgesehen werden, welche die Schlaufe
aufnimmt. Hierbei treten jedoch wesentliche Nachteile
auf, vor allem bei hohen Beschleunigungen, Verzögerungen
und Geschwindigkeiten des Taktvorschubs, nämlich die
folgenden:

Beim Beschleunigen und Vorschieben des Bandes muss die
Masse der Schlaufe ebenfalls beschleunigt und zum Teil
angehoben werden, was grössere Beschleunigungskräfte
bedingt.

Beim Abbremsen schlägt das Band gegen das Umlenksegment
oder gegen den auf ihm montierten Bandniederhalter, was
zu Beschädigungen am Band führt.

Durch die hohen Taktzahlen kann die Schlaufe in
Schwingungen geraten, wodurch sie teilweise aus der
Grube springen und Beschädigungen verursachen kann.

Die Kosten zur Erstellung einer Grube sind sehr hoch,
und oft fehlt es auch am Platz.

Durch das Schwingen der Schlaufe, die Umlenkung beim
Umlenksegment und durch das Anschlagen des Bandes gegen
das Segment oder gegen den Niederhalter wird die magnetische Leitfähigkeit des Bandes verringert, was bei der
Verwendung des Bandes zu Transformatoren-Kernblechen zu
grösseren Verlusten im fertigen Transformator führt.

Diese Nachteile sollen nun vermieden werden, wofür erfindungsgemäss eine Vorrichtung vorgeschlagen wird, die
durch die Merkmale des Anspruchs 1 definiert ist.

Anhand der beiliegenden Zeichnungen soll die Erfindung
in ihren Unterschieden zum Stand der Technik beispielsweise näher erläutert werden; es zeigen in schematischer
Darstellung:

Fig. 1    den genannten Stand der Technik und

Fig. 2    die erfindungsgemässe Vorrichtung.

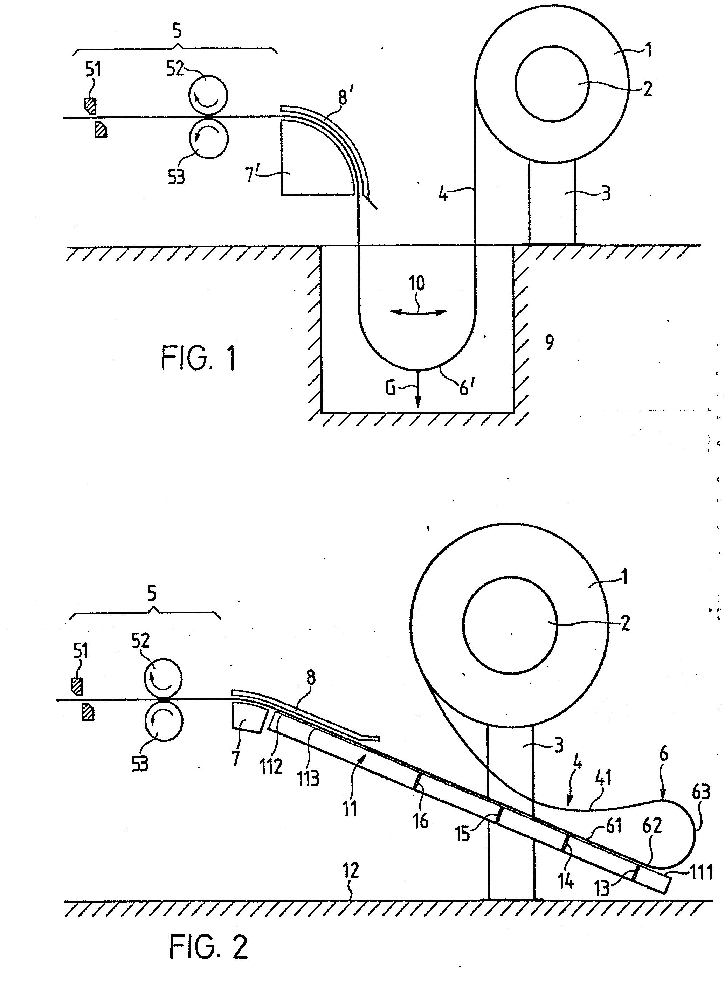

Eine der bisher bekannten Vorrichtungen ist in Fig. 1
dargestellt. Von einer Bandrolle 1, die auf einen Rollenhaspel 2 aufgewickelt ist, der auf einem Rollenständer
3 steht, wird ein Metallband 4 abgewickelt. Dieses Abwickeln geschieht dadurch, dass der Rollenhaspel 2 von
einem nicht dargestellten Motor in Drehung versetzt wird.
Der letztere hält die Umfangsgeschwindigkeit des Bandes auf einem Wert, der einen einigermassen konstanten Nachschub am Band zu einer Bandabtrennvorrichtung 5 gewährleistet. Diese ist hier symbolisch durch eine Schere 51
und zwei Vorschubwalzen 52, 53 dargestellt, welche das
Band im Takt der Bewegung der Schere 51 vorwärtsbewegen,
also schrittweise oder intermittierend. Damit sich diese
ungleichmässige Bewegung nicht auf die Bandrolle 1 auswirken kann, wird das Band 4 in einer Ausgleichsschlaufe
6' zur Schere 51 geführt. Bis jetzt bestand keine andere
Möglichkeit, als eine Grube 9 für die Aufnahme dieser
Schlaufe 6' vorzusehen, was nicht nur kostspielig war,
sondern oft auch noch ein Problem bedeutete, den notwendigen Raum hierfür vorzusehen, insbesondere in mehrstöckigen Gebäuden. Die Schlaufe muss nämlich genügend
gross sein, um den unregelmässigen Vorschub der Walzen
52, 53 auffangen zu können. Dennoch konnte es vorkommen,
dass diese Unregelmässigkeiten zu Schwingungen in der
Schlaufe führten, wie sie durch den Doppelpfeil 10 angedeutet sind, und dies trotz des relativ grossen Gewichtes G der Schlaufe. Solche Schwingungen, die in ungünstigen Fällen noch durch die Resonanzfrequenz der
hängenden Schlaufe verstärkt werden können, führten dazu,
dass die Schlaufe gegen die Wände der Grube 9 schlug
oder sogar aus der Grube heraussprang, was zu den bereits
in der Einleitung aufgeführten Bandschädigungen führte.

Die in Fig. 2 dargestellte erfindungsgemässe Vorrichtung
schafft hier Abhilfe. Massgebend hierbei war die Ueberlegung, dass eine Ausgleichsschlaufe nicht mehr schwingen
kann, wenn sie nicht frei hängend, sondern auf einer
Unterlage aufliegend angeordnet ist. Zu diesem Zwecke
wird ein Schlaufentisch 11 vorgesehen. Dieser ist unter
dem Rollenhaspel 2, einigermassen symetrisch zu diesem,
angeordnet, d.h. die beiden Enden 111, 112 des Schlaufentisches müssen aus betrieblichen Gründen beidseitig des
Rollenhaspels 2 vorstehen. Der Schlaufentisch 11 kann
horizontal angebracht sein, zweckmässig ist jedoch eine
Neigung in der Bandlaufrichtung von bis zu 30°, vorzugsweise 22° zur Horizontalen. Hierbei liegt das einlaufseitige Ende 111 tiefer als das ablaufseitige Ende 112,
das sich unmittelbar vor dem nun wesentlich kürzeren Einlaufsegment 7 befindet. Auf diesem Schlaufentisch 11 wird
nun die Schlaufe 6 liegend abgelegt, d.h. mit ihrem ablaufseitigen Abschnitt 61, der an das untere Ende 62 des
eigentlichen Schlaufenbogens 63 angrenzt. Nur noch der
zwischen der Bandrolle 1 und der Schlaufe 6 befindliche
Abschnitt 41 des Bandes 4 hängt frei durch. Dieser Abschnitt wird aber von den Unregelmässigkeiten des schrittweisen Vorschubs durch die Walzen 52, 53 praktisch nicht
beeinflusst und neigt daher auch nicht zum Schwingen.

Infolge der Unterschiede im Abrollen des Bandes 4 von der
Bandrolle 1 und den durch die Walzen 52, 53 erzeugten
Taktvorschub wandert die Schlaufe 6, insbesondere der
Schlaufenbogen 62, auf dem Schlaufentisch 11 hin und her.
Dieser Bewegungsbereich darf jedoch nicht zu gross werden; so muss vermieden werden, dass einerseits die
Schlaufe 6 den Schlaufentisch 11 an seinem einlaufseitigen Ende 111 verlässt und auf dem Boden 12 abrollt,
andererseits darf der Schlaufenbogen sich nicht dem
Bandniederhalter 8 zu stark nähern. Im weiteren muss
auch ein zu starker Durchgang des Bandabschnittes 41
vermieden werden, damit dieser nicht auf dem darunterliegenden, sich über den Schlaufentisch 11 hinwegbewegenden Abschnitt 61 schleift. Zu diesem Zweck sind im
Schlaufentisch 11 mehrere Endschalter 13, 14 15, 16 oder
jeweils quer verlaufende Reihen von einzelnen Endschaltern vorgesehen, die das Vorhandensein des Bandes registrieren, beispielsweise durch Induktion. Der Schalter 16 bzw. die entsprechende Schalterreihe dient als Sicherheitsendschalter. Die genannten Endschalter wirken wie folgt:

Bei noch stillstehender Abtrennvorrichtung 5, aber sich drehendem Rollenhaspel 2 wird das Band 4 abgerollt und zu einer Schlaufe gebildet. Diese Schlaufe 6 wandert dabei gegen das Ende 111 des Schlaufentisches zu, bis sie den Endschalter 13 erreicht. Dadurch wird der Motor für den Rollenhaspel ausgeschaltet. Wird nun infolge des Taktvorschubes das Band vorgezogen, bewegt sich die Schlaufe bis zum Endschalter 14. Der Rollenhaspelmotor wird wieder eingeschaltet, und das Band wird von der Bandrolle 1 nachgeführt. Wenn die Nachführung nicht schnell genug erfolgt, wandert die Schlaufe 6 weiter bis zum Endschalter 15. Dieser bewirkt eine höhere Drehzahl des Rollenhaspels, damit das Band wieder genügend schnell nachgeführt wird. Erreicht aber trotz dieses schnelleren Nachschubes die Schlaufe 6 den Sicherheitsendschalter 16, wird der Antrieb für die Walzen 52, 53 sofort ausgeschaltet, damit die Schlaufe 6 nicht um das Ende des Bandniederhalters 8 herumgespannt wird. In diesem Fall muss die Drehzahl des Rollenhaspels nachgeregelt werden, da offenbar zu wenig Band nachgeführt wird.

Der Bandniederhalter 8 überdeckt auch hier, wie schon bei der Ausführungsform nach Fig. 1, das Einlaufsegment 7, ragt aber noch über einen an das ablaufseitige Ende 112 des Schlaufentisches 11 angrenzenden Abschnitt 113 hinweg. Damit wird eine gute Bandführung erreicht und vor allem auch sichergestellt, dass Unterschiede in den Bandgeschwindigkeiten ausschliesslich durch die Schlaufe 6 ausgeglichen werden.

## Patentansprüche

1. Vorrichtung zur Aufnahme und Steuerung einer Ausgleichsschlaufe in einem kontinuierlich von einer Bandrolle herangeführten und schrittweise zu einer Bandabtrenneinrichtung weiterbewegten Metallband, wobei die Bandrolle (1) auf einem Rollenhaspel (2) aufgewickelt ist und die Ausgleichsschlaufe (6) den Uebergang vom kontinuierlich zum schrittweise bewegten Teil des Bandes (4) bildet, gekennzeichnet, durch einen Schlaufentisch (11), der als Auflage für den ablaufseitigen Abschnitt (61) der Schlaufe (6) bestimmt ist.

2. Vorrichtung nach Anspruch 1, dadurch gekennzeichent, dass der Schlaufentisch horizontal ist.

3. Vorrichtung nach Anspruch 1, dadurch gekennzeichnet, dass der Schlaufentisch in Bandrichtung geneigt ist, wobei er in dieser Richtung ansteigend angeordnet ist.

4. Vorrichtung nach Anspruch 3, dadurch gekennzeichnet, dass der Neigungswinkel bis zu 30° zur Horizontalen beträgt.

5. Vorrichtung nach einem der vorangehenden Ansprüche, dadurch gekennzeichnet, dass der Schlaufentisch (11) unter dem die Bandrolle (1) tragenden Rollenhaspel (2) angebracht ist, wobei er mit seinen beiden Enden (111, 112) beidseitig unter diesem (2) vorsteht.

6. Vorrichtung nach einem der vorangehenden Ansprüche, gekennzeichnet, durch mehrere, entlang des Schlaufentisches in demselben angeordnete einzelne Endschalter (13, 14, 15, 16) oder Reihen von Endschaltern, die einen den Rollenhaspel (2) drehenden Motor in seiner Drehzahl steuern.

7. Vorrichtung nach Anspruch 1, mit einem Bandniederhalter (8) unter welchem das Band (4) über ein Führungssegment (7) läuft, dadurch gekennzeichnet, dass dieser Niederhalter über einen an das ablaufseitige Ende (112) des Schlaufentisches (11) angrenzenden Abschnitt (113) des letzteren hinwegragt.

FIG. 1

FIG. 2